# EUROPEAN PATENT SPECIFICATION

(11) **EP 0 395 304 B1**
(45) Date of publication and mention of the grant of the patent: **07.07.1993**
(21) Application number: 90304212.5
(22) Date of filing: 19.04.1990
(51) Int. Cl.: B60K 23/04, F16H 1/445

(54) **Transmission system including a differential in a motor vehicle**
Antriebssystem mit Differential für ein Kraftfahrzeug
Système de transmission avec différential pour véhicule motorisé

(30) Priority: 28.04.1989 JP 111736/89
(43) Date of publication of application: 31.10.1990
(73) Proprietor: FUJI JUKOGYO KABUSHIKI KAISHA, Tokyo (JP)
(72) Inventor: Kobayashi, Toshio, c/o Fuji Jukugyo K. K., Shinjuku-ku, Tokyo (JP)
(74) Representative: Kirk, Geoffrey Thomas

(56) References cited:
- EP-A- 390 362
- DE-A- 3 518 682
- DE-A- 3 821 080
- FR-A- 1 156 754
- GB-A- 1 224 034
- US-A- 2 962 916
- PATENT ABSTRACTS OF JAPAN vol. 12, no. 18 (M-660)(2865) 20 January 1988, & JP-A-62 178434 (MAZDA MOTOR CORP) 05 August 1987,

## Description

The present invention relates to a transmission system for a two-wheel drive motor vehicle, and more particularly to a device for restricting operation of a differential forming part of the transmission system.

In a motor vehicle, a differential is provided between right and left driving wheels to absorb difference in speeds of the wheels while turning a corner and to equally distribute driving torque to the driving wheels. However, when one of the wheels slips owing to low friction coefficient of a road surface or because of a decrease in load on the wheel, total distributed driving torque decreases. In order to prevent such a decrease of the torque, a limited slip differential (LSD) has a multiple-disk friction clutch disposed therein to automatically restrict the differential operation, thereby transmitting sufficient torque to the wheels to drive the vehicle. However, the LSD is operated to restrict the differential operation in accordance with the change in driving torque, namely, with the operation of the accelerator pedal of the vehicle. Therefore, if the accelerator pedal is depressed or released while turning a corner, it becomes difficult to steer the vehicle because of the operation of the LSD. The LSD is, therefore, used only for a rear differential of a rear drive vehicle, or of a four-wheel drive vehicle, or for a front differential in a particular type of front drive vehicle.

A viscous coupling containing a high viscous fluid recently has been proposed for restricting the differential operation of the differential. The viscous coupling operates to generate a coupling torque in proportion to the difference between right-wheel speed and left-wheel speed. Thus, the vehicle can be steered while the differential operation is restricted despite the operation of the accelerator pedal.

However, since the coupling torque depends only on the difference between the speeds of the right and left wheels, it is also necessary to determine the torque capacity of the viscous coupling in consideration of difference in effective diameter of the wheels and of deterioration of the coupling. Particularly, in a vehicle having an antilock braking system (ABS), a viscous coupling having a small torque capacity is preferable to prevent locking thereof when antilock braking is effected. Hence, the differential operation may not always be restricted when necessary. In addition, the viscous coupling is operated only in response to the speed difference and cannot be intentionally controlled in accordance with the driving conditions and conditions of the road surface.

Japanese Patent Publication A-62-10327 discloses a system for controlling the differential operation of a differential disposed between right and left wheels. In the system, a fluid operated multiple-disk friction clutch is provided between the case of the differential and a side gear within the differential for producing the torque for restricting the differential operation. Actuating pressure of oil for the clutch is controlled for changing the differential operation restricting torque in dependency on the difference between speeds of right and left wheels so as to improve the driveability of the motor vehicle. However, the structure of the clutch is too complicated to be easily installed in an ordinary differential.

In addition, the multiple-disk friction clutch uses the oil in the automatic transmission as actuating oil for both actuating and lubricating the clutch, since the oil has a good friction characteristic and a low viscosity. On the other hand, a final reduction gear of the differential provided on the outside of the differential case is composed by a hypoid gear. In such a differential, extreme-pressure lubricant contains additives to improve ability to adhere to the surfaces of metals under high bearing pressures. Such a lubricant is liable to cause the multiple disks of the clutch to stick and slip, which cause the unpleasant vibration and noise of the vehicle body.

Moreover, the clutch is applied to an independently disposed rear differential of a rear drive vehicle with front-mounted engine or a four-wheel drive vehicle and not to a differential of a front drive vehicle with front-mounted engine or a rear drive vehicle with rear-mounted engine having a transmission of transaxle type.

The applicants co-pending E.P. application 90302664.9 which corresponds to the E.P. publication No. 0 390 362 applies to a power transmission system having a linearly arranged transmission mounted adjacent a front mounted engine to drive the rear wheels of the vehicle via a transmission shaft. The motor vehicle transmission system claimed in the present application is precharacterised by reference to GB-A-1 224 034 and accordingly consists of:-
a motor vehicle transmission system comprising: a main clutch engageable between an engine of the vehicle and a transaxle transmission for coupling the engine to the driving wheels; a differential and a final reduction gear coupled to the driving wheels, said differential having a casing, a fluid operated clutch mounted in a cover adjacent to the casing of the differential said fluid operated clutch consisting of; an outer drum coupled to the casing of the differential and supporting a plurality of outer discs, an inner drum coupled to the drive wheels via axles, said inner drum supporting a plurality of inner discs, a piston inserted in a piston chamber formed in said cover so that the supply of clutch oil to the piston chamber causes reciprocation of the piston to actuate the clutch, an oil chamber supplied with said clutch oil, oil seal means between the oil chamber and the interior of the differential casing to separate the clutch oil from the different lubricant oil supplied to the differential and a control means to control the fluid operated clutch in accordance with the driving conditions of the vehicle and a slipping determining section for detecting slipping of one of the right or left driving wheels in accordance with the difference in speed thereof, characterised in that; a bearing is provided to engage between the piston and the discs to accommodate relative rotary motion of the clutch discs so that the clutch oil in the piston chamber is not subject to centrifugal pressure forces.

In order that the invention may be more readily understood, it will now be described, by way of example only, with reference to the accompanying drawings, in which:-
Figs. 1a and 1b show a schematic diagram of a power transmission system according to the present invention, respectively;
Figs. 2a and 2b show a sectional view of a main part of the system;
Figs. 3a and 3b show a sectional view of another embodiment of the present invention;
Figs. 4a and 4b show a hydraulic control system for controlling fluid operated multiple-disk friction clutch of the system; and
Fig. 5 shows a flowchart showing the operation of a control unit of the system.

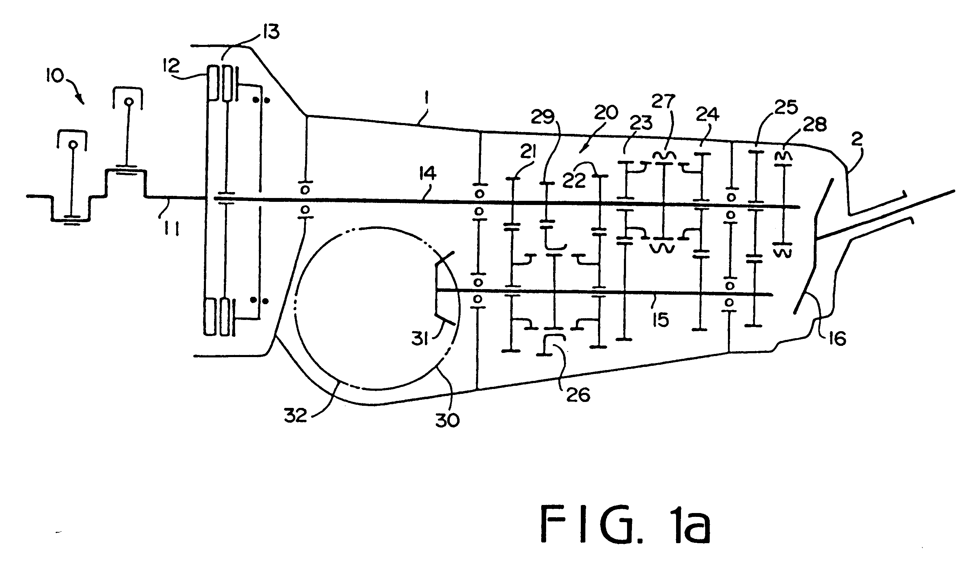

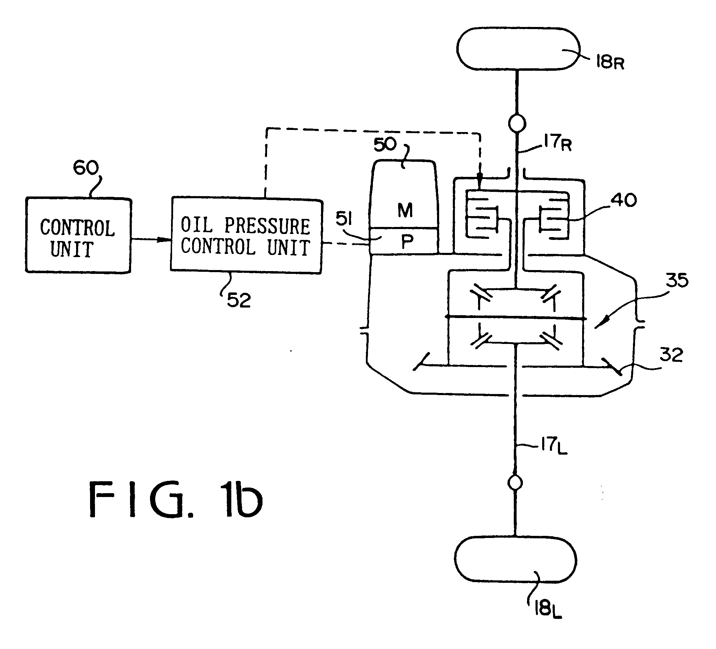

Figs. 1a and 1b show a power transmission system in a front-wheel drive motor vehicle having an engine 10 longitudinally mounted at a front portion thereof, and a transaxle in which a transmission 20, a final reduction gear 30 and a differential 35 are provided. The engine 10 is connected to the transmission 20 housed in a transmission case 1 and a transmission cover 2 through a crankshaft 11, a clutch 12 and an input shaft 14.

The manual transmission 20 has an output shaft 15 parallel with the input shaft 14, five pairs of change-speed gears 21 to 25 corresponding to first to fifth (overdrive) speed gears and synchronizers 26 to 28. The synchronizers 26 to 28 are disposed between the gears 21 and 22, between 23 and 24 and adjacent the gears 25, respectively. A reverse drive gear 29 mounted on the input shaft 14 is operatively connected with a gear formed on one side of a sleeve of the synchronizer 26 through an idler gear (not shown) for reverse drive.

A synchronizer operating device 16 protruding out of the transmission case 2 to be operatively connected to a shift lever (not shown) at a driver's seat, is connected with the synchronizers 26 to 28 through a shift rod and shift forks (not shown). The operating device 16 is operated to select one of the first to fifth speed gears 21 to 25 and the reverse gear 29. The output shaft 15 is integral with a drive pinion 31 which engages with a ring gear 32 of the final reduction gear 30 of the differential 35 for front wheels 18R and 18L. The power of the engine 10 is transmitted to front wheels 18R and 18L through the differential 35 and axles 17R and 17L.

A differential restricting clutch 40 is further provided between the differential 35 and the axel 17R so as to restrict the differential operation of the differential 35. The clutch is operated by an oil pressure control unit 52 which is applied with electronic signals from a control unit 60 for controling the clutch 40 in accordance with various driving conditions. The clutch 40 is supplied with oil by a pump 51 which is provided in the transmission case 1 and driven by a motor 50.

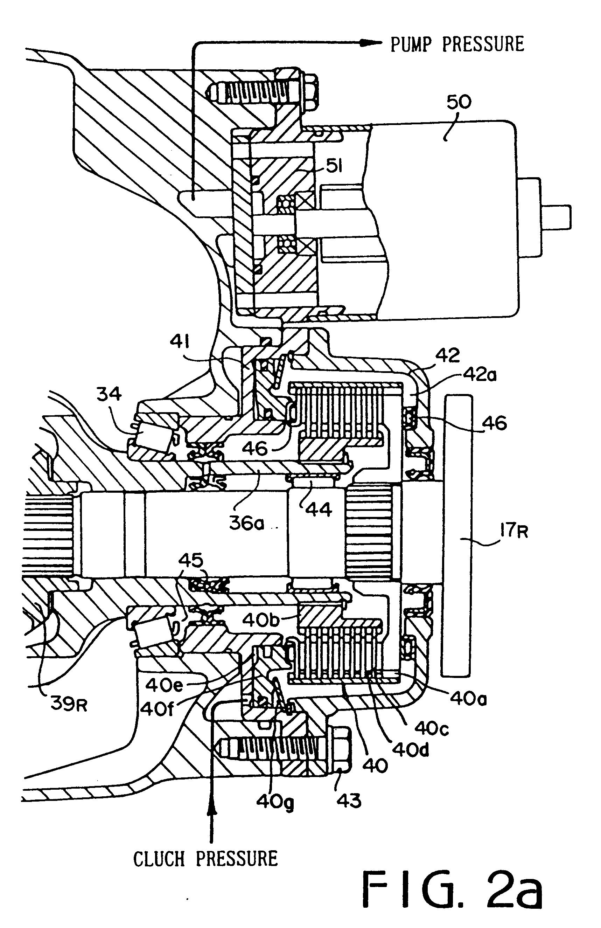

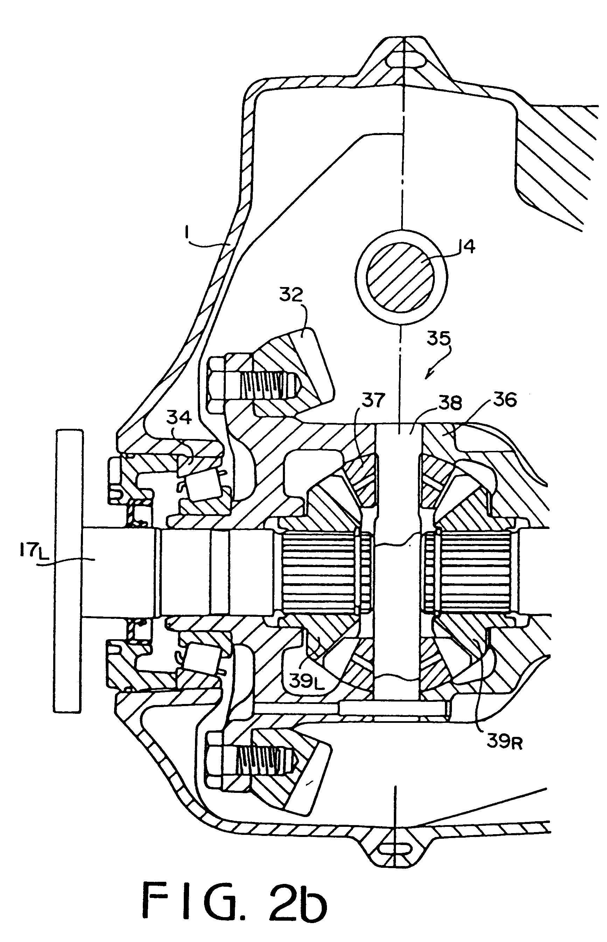

Referring to Figs. 2a and 2b, the differential 35 housed in a differential case 36 integral with the ring gear 32 comprises a pinion shaft 38 rotatably supported in the case 36, a pair of differential pinions 37 rotatably mounted on the pinion shaft 38, a pair of side gears 39R and 39L meshed with the pinions 37. The side gears 39R and 39L are connected to the axles 17R and 17L through splines, respectively.

The differential case 36 has a cylindrical portion 36a rotatably supported in the transmission case 1 through a taper roller bearing 34 and housed in a retainer bearing 41 secured to the case 1. The cylindrical portion 36a is rotatably mounted on the axle 17R through a needle bearing 44.

The differential restricting clutch (fluid operated multiple-disk friction clutch) 40 is housed in a bowl-like cover 42 and mounted on the axle 17R and the cylindrical portion 36a. An oil chamber 42a of the clutch 40 is supplied with oil having characteristics different from that for hypoid gears of the differential by the oil pump 51.

The clutch 40 comprises an outer drum 40a secured to the axle 17R and an inner drum 40b splined on the cylindrical portion 36a. A plurality of outer disks 40c are splined on the drum 40a and a plurality of inner disks 40d are splined on the drum 40b, disposed alternately with the disks 40c. A ring piston 40f is slidably mounted on an inner wall of the retainer bearing 41 and on an inner guide portion thereof. The piston 40f engaged with the outermost disks 40c through a thrust bearing 46 and with a spring 40g. A piston oil chamber 40e is defined between the piston 40f and the retainer bearing 41.

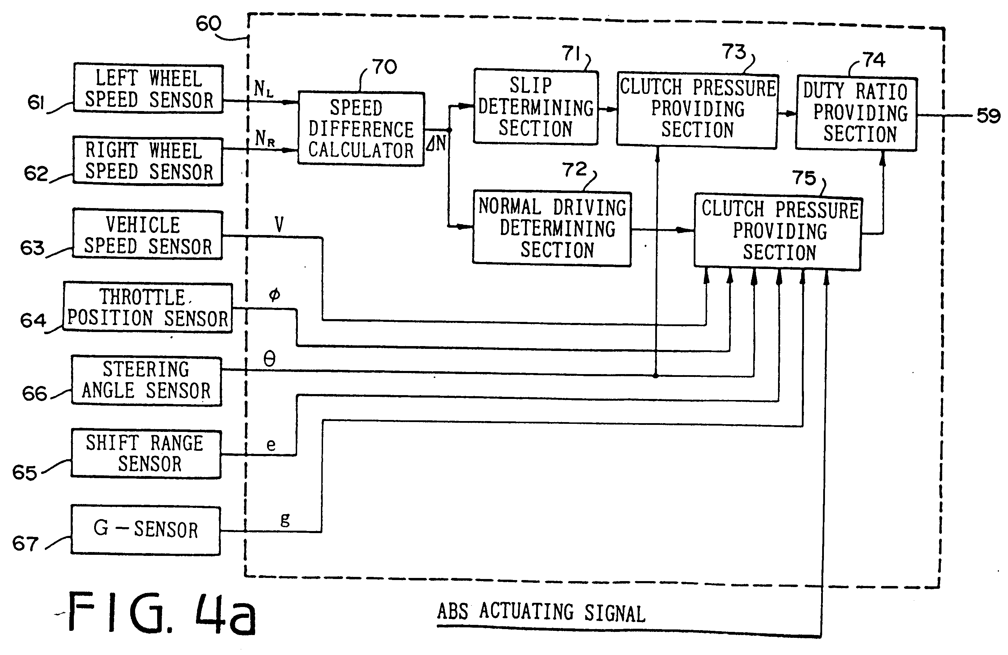

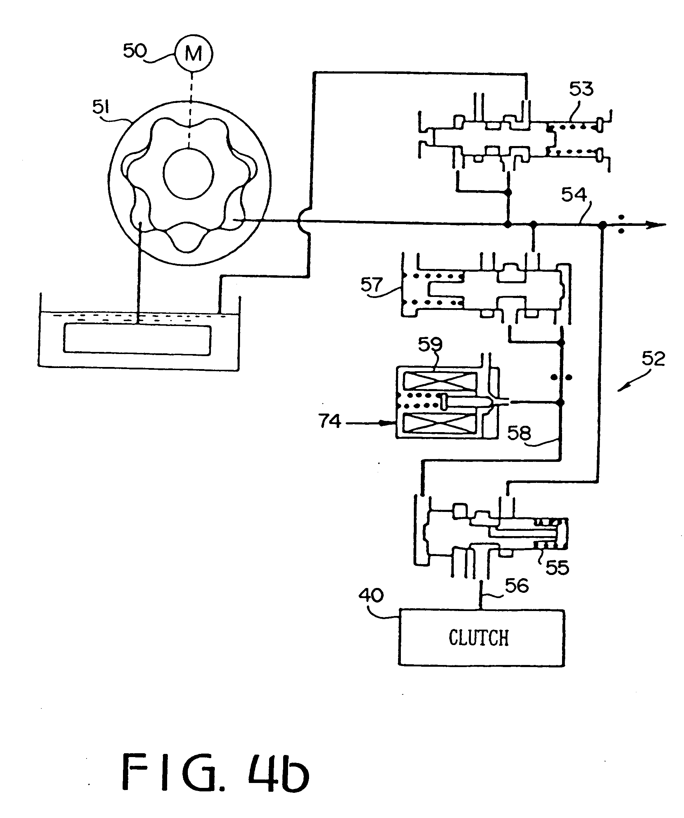

A hydraulic control system for the clutch 40 is described hereinafter with reference to Figs. 4a and 4b. The hydraulic control system comprises the oil pressure control unit 52 and the control unit 60. The oil pressure control unit 52 has a pressure regulator valve 53, a pilot valve 57, a clutch control valve 55 and a solenoid operated duty control valve 59 for controlling the differential restricting clutch 40.

Oil from the oil pump 51 driven by the motor 50 is supplied to the pressure regulator valve 53 by which the pressure of oil is regulated to a predetermined value. The oil is fed to the piston chamber 40e of the clutch 40 through an oil passage 54, the clutch control valve 55 and an oil passage 56. The pilot valve 57 operates to provide a constant pilot pressure. The solenoid operated duty control valve 59 is operated by pulses from the control unit 60 at a duty ratio dependent on driving conditions of the vehicle, so that the drain of the oil from the control valve 59 provides a control pressure. The control pressure is applied to an end of the control valve 55 through an oil passage 58 to control the oil supplied to the clutch 40 so as to control the clutch pressure.

The control unit 60 is fed with output signals from a left-wheel speed sensor 61, a right-wheel speed sensor 62, a vehicle speed sensor 63, a throttle position sensor 64, a shift range sensor 65, a steering angle sensor 66 and a G-sensor 67, which are provided for determining the driving conditions of the motor vehicle. A left-wheel speed N_{L} from the left-wheel speed sensor 61 and a right-wheel speed N_{R} from the right-wheel speed sensor 62 are applied to a speed difference calculator 70 where a speed difference Δ N between the left-wheel speed N_{L} and the right-wheel speed N_{R} is calculated in accordance with Δ N = N_{L} - N_{R}. When the difference Δ N exceeds a predetermined value, a slip determining section 71 applies a slip signal to a clutch pressure providing section 73. The clutch pressure providing section 73 has a clutch pressure look-up table storing a plurality of maximum clutch pressures P corresponding to a steering angle ϑ. Namely, the pressure decreases as the steering angle ϑ increases. The clutch pressure P is derived from the look-up table in accordance with the steering angle ϑ from the steering angle sensor 66. The derived clutch pressure P is fed to a duty ratio providing section 74 where a duty ratio corresponding to the clutch pressure P is obtained. A duty ratio pulse signal from the duty ratio providing section 74 is applied to the solenoid operated valve 59.

When the speed difference Δ N is smaller than the predetermined value, a normal driving determining section 72 applies a normal driving determining signal to a clutch pressure providing section 75 to derive a clutch pressure from a look-up table. The clutch pressure P is derived from the table in accordance with a vehicle speed V from the vehicle speed sensor 63 and a throttle valve opening degree φ from the throttle position sensor 64. A large clutch pressure P is derived in a high engine load and high vehicle speed ranges. The clutch pressure P is further corrected by a gear ratio e determined by the shift range sensor 65, the steering angle ϑ and an acceleration g detected by the G-sensor 67. That is, the clutch pressure is decreased with an increase of the steering angle ϑ and increased with an increase of the acceleration g so that an optimum clutch pressure in accordance with driving conditions can be provided. The duty ratio signal corresponding to the clutch pressure P is also fed to the solenoid operated valve 59.

In a vehicle having an antilock braking system on a brake system, when the antilock braking is effected, an ABS actuating signal is applied to the clutch pressure providing section 75 to render the clutch pressure P zero, thereby releasing the clutch 40.

Describing the operation of the system, the power of the engine 10 is transmitted to the manual transmission 20 through the clutch 12. The output of the transmission 20 is transmitted to the front differential 35 through the output shaft 15 and to the front wheels 18R and 18L.

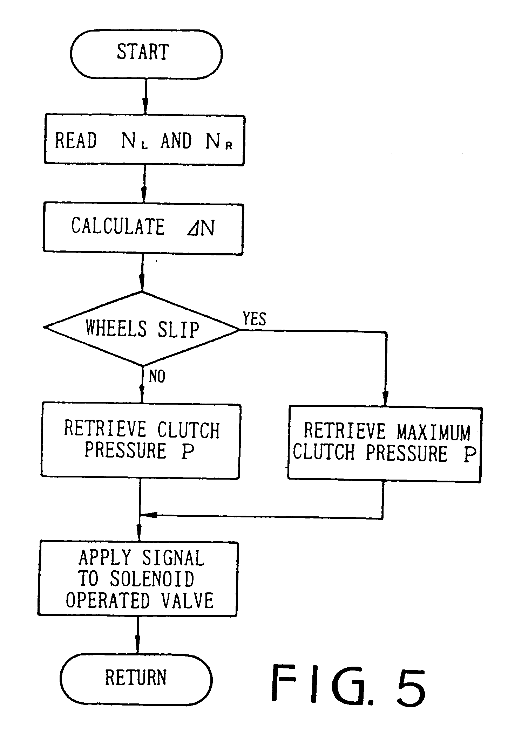

While the vehicle is driven, output signals from various sensors representing such factors as the left-wheel speed N_{L} and the right-wheel speed N_{R} are fed to the control unit 60 to carry out a program shown in Fig. 5.

When the vehicle is driven on a road the friction coefficient of which differs from the right side to the left side, and when one of the wheels 18L and 18R slips, it is determined that the wheel is slipping in accordance with the large speed difference Δ N. Thus, the clutch pressure P for the clutch 40 becomes maximum so that the piston 40f presses the disks 40c and 40d, thereby generating differential operation restricting torque between the differential case 36 and the side gears 39R. As a result, the differential 35 is locked to provide a stable driving and to effectively transmit torque to the rear wheels 18L and 18R, thereby ensuring driveability.

When the vehicle is normally driven on a dry road, the speeds N_{L} and N_{R} are substantially equal (N_{L} ≒ N_{R}). Therefore, the clutch pressure P is set to a proper value in accordance with driving conditions. When the vehicle speed V and the throttle opening degree φ are small, the clutch pressure P is set to substantially zero so as to release the clutch 40.

More particularly, the solenoid operated valve 59 operates to shift a spool of the clutch control valve 55 against the spring, thereby draining the piston chamber 40e of the clutch 40 through the control valve 55. Thus, the differential 35 becomes free. As a result, the vehicle can be driven around a corner with the differential operation.

At a start or at an acceleration of the vehicle, when the throttle opening degree φ or the vehicle speed V increases, the clutch pressure P also increases, thereby generating differential restricting torque. Thus, good driveability, driving stability, and steerability are ensured. The clutch pressure P varies in accordance with the vehicle speed V, the throttle opening degree φ , the steering angle ϑ and the gear ratio e to further improve the characteristics.

As described above, when the left-wheel 18L rotates faster than the right-wheel 18R (N_{L} > N_{R}) and the difference Δ N(N_{L} - N_{R}) of the speeds are smaller than the predetermined value, a clutch pressure P derived from the table is applied to the clutch 40, thereby generating restricting torque Tc. Since the differential case 36 rotates faster than the right wheel speed N_{R} by Δ Nb/2, a torque is transmitted to the right wheel 18R from the case 36 through the clutch 40. Therefore, when the torque transmitted to the ring gear 32 is Ti, the left wheel torque and the right wheel torque are expressed as (Ti - Tc)/2 and (Ti + Tc)/2, respectively. Thus, a smaller torque is transmitted to the left wheel than to the right wheel. On the other hand, when the right wheel speed is larger than the left wheel speed (N_{R} > N_{L}), the left wheel torque is represented by (Ti + Tc)/2 and the right wheel torque is represented by (Ti - Tc)/2, thereby transmitting a larger torque to the left wheels. Thus, by changing the restricting torque Tc of the clutch 40, the differential 35 can be continuously changed from the differential operating state to the locked state.

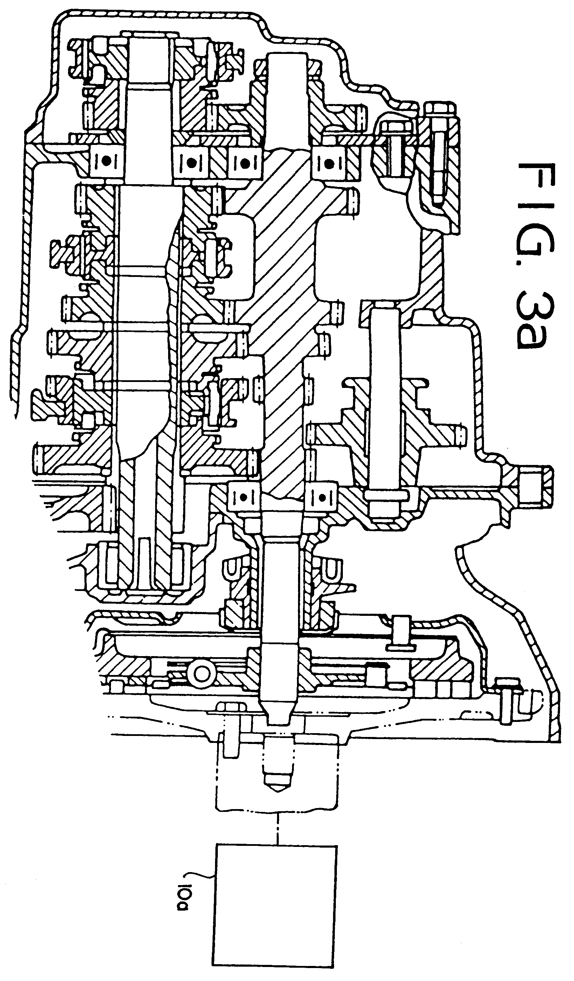

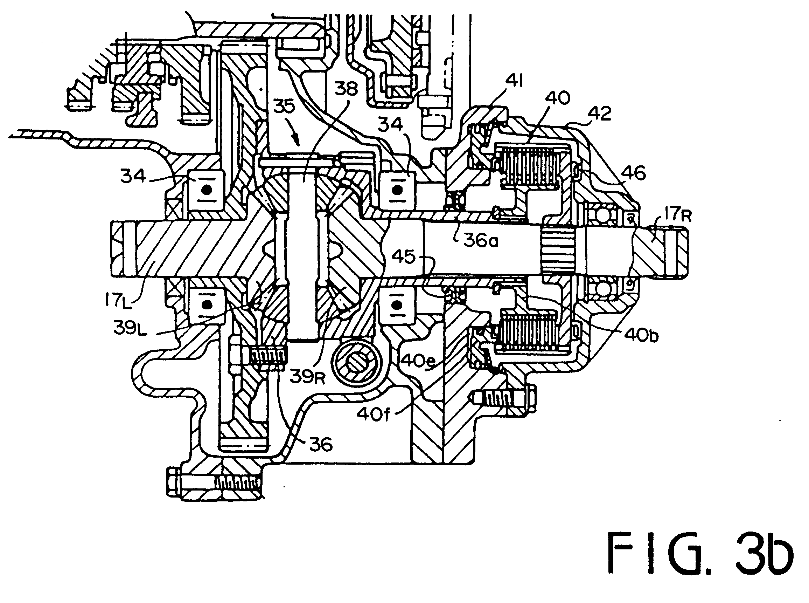

Figs. 3a and 3b show the second embodiment of the present invention applied to a trans-axle power transmission system where an engine 10a is laterally mounted. The same numerals as those in Figs. 1a to 2b designate the same parts as Figs. 1, 2a and 2b. The differential restricting clutch 40 is disposed adjacent the differential 35 so that a conventional transaxle needs to be only slightly modified.

The present invention may be adapted to a rear drive vehicle with a rear-mounted engine and also to a vehicle provided with an automatic transmission or a continuously variable transmission.

In accordance with the present invention, the differential restricting clutch disposed between the differential case and the side gear operates to produce the torque for restricting the differential operation of the differential. The differential operation restricting torque is changed dependent on the driving conditions of the motor vehicle so that the vehicle can be easily and stably driven on slippery roads. Further, optimum driveability, driving stability, and starting characteristics of the vehicle are obtained and steerability of the vehicle is improved when the vehicle is normally driven without slipping.

The differential operation restricting clutch can be easily installed to a conventional transaxle by disposing the clutch adjacent the differential.

Since the clutch is provided separated from the hypoid gears, the oil having the appropriate characteristic can be used. Thus, the stick/slip of disks does not occur when the wheels turn around a corner.

Further, the piston chamber does not rotate, so that the centrifugal force in the piston oil chamber does not occur, thereby ensuring the control of the clutch pressure.

The oil pump and the oil pressure control unit are provided adjacent the clutch, whereby the hydraulic circuit is shortened to quickly actuate the clutch.

## Claims

1. A motor vehicle transmission system comprising: a main clutch (13) engageable between an engine (10) of the vehicle and a transaxle transmission (1) for coupling the engine (10) to the driving wheels (18L, 18R); a differential (35) and a final reduction gear (32) coupled to the driving wheels (18L, 18R), said differential having a casing (36), a fluid operated clutch (40) mounted in a cover (42) adjacent to the casing (36) of the differential (35) said fluid operated clutch (40) consisting of; an outer drum (40d) coupled to the casing of the differential (35) and supporting a plurality of outer discs (40c), an inner drum (40b) coupled to the drive wheels (18L, 18R) via axles (17L, 17R), said inner drum supporting a plurality of inner discs (40d), a piston (40f) inserted in a piston chamber (40e) formed in said cover (42) so that the supply of clutch oil to the piston chamber (40e) causes reciprocation of the piston to actuate the clutch, an oil chamber (42a) supplied with said clutch oil, oil seal means (45) between the oil chamber (42a) and the interior of the differential casing (36) to separate the clutch oil from the different lubricant oil supplied to the differential (35) and a control means (60, 52) to control the fluid operated clutch (40) in accordance with the driving conditions of the vehicle and a slipping determining section (71) for detecting slipping of one of the right or left driving wheels in accordance with the difference in speed thereof, characterised in that;
a bearing (46) is provided to engage between the piston and the discs to accommodate relative rotary motion of the clutch discs (40c, 40d) so that the clutch oil in the piston chamber (40e) is not subject to centrifugal pressure forces.

2. A system according to claim 1, characterised in that the clutch is provided coaxially with the axis of the axles and has an outer drum operatively connected to one of a differential case or the axle, an inner drum operatively connected to the other of the axle or differential case.

## Patentansprüche

1. Kraftfahrzeugantriebssystem umfassend: eine Hauptkupplung (13), die zwischen einem Motor (10) des Fahrzeugs und einem Transaxle-Getriebe (1) einrückbar ist, um den Motor (10) mit den Antriebsrädern (18R, 18L) zu kuppeln; ein Differential (35) und ein mit den Antriebsrädern (18L, 18R) gekoppeltes Radvorgelege (32), wobei das Differential ein Gehäuse (36) hat, eine in einer Verkleidung (42) nahe dem Gehäuse (36) des Differentials (35) angeordnete flüssigkeitsbetriebene Kupplung (40), bestehend aus einer mit dem Gehäuse des Differentials (35) verbundenen und eine Vielzahl äußerer Scheiben (40c) tragendenen äußeren Trommel (40a), einer mit den Antriebsrädern (18L, 18R) über Achsen (17L, 17R) gekoppelten inneren Trommel (40b), die eine Vielzahl innerer Scheiben (40d) trägt, einem so in einer in der Verkleidung (42) ausgebildeten Kolbenkammer (40e) eingesetzten Kolben (40f), daß die Zuführung von Kupplungsöl in die Kolbenkammer (40e) die Hin- und Herbewegung des Kolbens zum Betätigen der Kupplung bewirkt, einer mit dem Kupplungsöl versorgten Ölkammer (42a), öldichtungsmitteln (45) zwischen der Ölkammer (42a) und dem Inneren des Differentialgehäuses (36) zum Abtrennen des Kupplungsöles von dem unterschiedlichen, dem Differential (35) zugeführten Schmieröl und Steuermitteln (60, 52) zum Steuern der flüssigkeitsbetriebenen Kupplung (40) in Abhängigkeit von den Betriebszuständen des Fahrzeugs und einer Schlupfermittlungseinheit (71) zum Feststellen des Durchdrehens von einem der rechten oder linken Antriebsräder in Abhängigkeit von deren Drehzahldifferenz, dadurch gekennzeichnet, daß
ein Lager (46) zum Eingreifen zwischen dem Kolben und den Scheiben vorgesehen ist, um die relative Drehbewegung der Kupplungsscheiben (40c, 40d) auszugleichen, so daß das Kupplungsöl in der Kolbenkammer (40e) nicht zentrifugalen Druckkräften ausgesetzt ist.

2. System nach Anspruch 1, dadurch gekennzeichnet, daß die Kupplung koaxial zur Achse der Achsen angeordnet und eine äußere Trommel entweder mit einem Differentialgehäuse oder der Achse und eine innere Trommel mit der anderen Achse oder dem Differentialgehäuse funktionell verbunden ist.

## Revendications

1. Système de transmission pour véhicules automobiles qui comprend : un embrayage principal (13) pouvant établir une liaison entre le moteur (10) du véhicule et la transmission (1) établissant la liaison entre le moteur (10) et les roues motrices (18L, 18R); un différentiel (35) et un engrenage réducteur final (32) relié aux roues motrices (18L, 18R), ledit différentiel comprenant un carter (36), un embrayage hydraulique (40) monté dans un capot (42), près du carter (36) du différentiel (35), ledit embrayage (40) comprenant un tambour extérieur (40d) accouplé au carter du différentiel (35) et qui supporte un certain nombre de disques extérieurs (40c), un tambour intérieur (40b) accouplé aux roues motrices (18L, 18R) par l'intermédiaire d'essieux (17L, 17R), ledit tambour intérieur supportant un certain nombre de disques intérieurs (40d), un piston (40f) logé dans une chambre (40e) formée dans le capot (42) de manière que l'alimentation en liquide hydraulique de la chambre de piston (40e) produit un mouvement de va-et-vient du piston pour actionner l'embrayage, une chambre (42a) alimentée avec ledit liquide d'embrayage, des moyens d'étanchéité (45) entre la chambre à liquide hydraulique (42a) et l'intérieur du carter de différentiel (36) afin de séparer le liquide d'embrayage du lubrifiant fourni au différentiel (35) et des moyens (60, 52) pour commander l'embrayage hydraulique (40) en fonction des conditions de marche du véhicule, et une section (71) qui détecte le degré de dérapage ou de glissement des roues motrices de droite ou de gauche en se basant sur la différence entre leurs vitesses de rotation, caractérisé en ce qu'un palier est prévu entre le piston et les disques afin d'accommoder ou d'adapter le mouvement de rotation entre les disques d'embrayage (40c, 40d) de manière que le liquide hydraulique d'embrayage contenu dans la chambre de piston (40e) ne soit pas exposé aux pressions dues à la force centrifuge.

2. Système selon la revendication 1, caractérisé en ce que l'embrayage est monté coaxialement à l'axe des essieux et possède un tambour extérieur effectivement relié à l'un des carters différentiels ou des essieux, un tambour intérieur étant relié effectivement à l'autre essieu ou au carter différentiel.
